# EUROPEAN PATENT SPECIFICATION

(11) **EP 2 686 837 B1**
(45) Date of publication and mention of the grant of the patent: **14.09.2016**
(21) Application number: 12757911.8
(22) Date of filing: 19.03.2012
(51) Int. Cl.: G08B 21/18, A01K 27/00, G08B 21/02

(54) **PET TRACKING**
ÜBERWACHUNG VON HAUSTIEREN
SUIVI D'UN ANIMAL FAMILIER

(30) Priority: 17.03.2011 AU 2011900967; 19.09.2011 US 201161536547 P
(43) Date of publication of application: 22.01.2014
(73) Proprietor: Maxwell Forest Pty Ltd., Surry Hills, NSW 2010 (AU)
(72) Inventor: SCHOFIELD, Anthony Mark, Ashfield New South Wales 2131 (AU); COOKE, Matthew Emmett, Toorak VIC 3142 (AU)
(74) Representative: Boult Wade Tennant
(86) International application number: PCT/AU2012/000285
(87) International publication number: WO 2012/122607

(56) References cited:
- US-A- 5 646 593
- US-A- 6 067 018
- US-A- 6 067 018
- US-A1- 2009 315 714
- US-A1- 2010 219 967
- US-B1- 6 970 090

## Description

### BACKGROUND

### Field of the Invention

Described embodiments relate generally to tracking the location of pets such as dogs and cats.

### Description of Related Art

When animals are kept as pets it can be quite upsetting and inconvenient if the animal goes missing. When a pet is lost, the pet owner typically needs to find the pet via traditional methods.

Various attempts have been made to provide pet tracking devices. These products typically use GPS location determination as the primary means of location determination. GPS location determination is energy intensive, and as a result these products are large and heavy so that they can accommodate the large battery requirement of an energy- intensive device. Therefore, they are only suitable for larger dogs. Despite their size, they also have relatively short battery life of typically a day or two, and have a high leakage current due to the necessity of a secondary battery cell.

It would therefore be advantageous if there were a pet-tracking device that provided pet owners with the location of their pet and that ameliorated at least some of the disadvantages of the prior art.

In United States Patent 5,646,593, there is described a child proximity detection unit including two transceivers which communicate messages with one another. Only a properly authorized parent can attend a message to the child unit. However, a properly authorized parent can authorize another parent to adopt a child unit.

In United States Patent 6,067,018, there is described a lost pet notification system including three elements: a pet collar that automatically activates an alarm once the pet becomes lost, a portable hand held unit that continually monitors the location of the pet, and a base station that automatically transmits a signal to the owner once the portable unit determines that the pet is lost.

### SUMMARY

According to the invention a method for tracking a pet includes associating a beacon with a responder; polling the responder by transmitting a signal from the beacon, the beacon in a first power state; receiving, by the beacon, a response from the responder, wherein the response from the responder includes a beacon synchronisation message; entering a low power state on the beacon for a **predetermined** duration, the low power state consuming less power than the first power state, wherein the predetermined duration is determined from the synchronisation message; resuming the first power state following the predetermined duration; polling, by the beacon, the responder following the resumption of the first power state; and, responsive to not receiving a response from the responder within a predetermined time following the polling, transmitting an alert from the beacon. In one embodiment, a failed response is considered to be one of:
a. a response not received from the responder in the time window;
b. a response received in the time window with an incorrect check sum or with other erroneous data; and
c. a response received in the time window where the relative signal strength of the response is below a threshold value where the threshold value can be set at system initialization time and may be varied by a message received from a server during system operation.

Entering a low power state on the beacon decreases the energy requirements. Decreasing the energy requirements enables the device to go longer between charging and enables smaller devices to be designed.

Embodiments of the invention further comprise the step of an alert being transmitted from the beacon by transmitting the alert via a communication network. This alert signal can be transmitted using a communication protocol such Wi-Fi, WiMAX, UMTS or LTE. The alert can include a location message indicating the location of the beacon. Embodiments of the invention further comprise the step of calculating the location for transmission by the beacon using a location determination method including one or more of network-based, SIM-based or device-based methods. By only using location determination after failing to receive the subsequent response and when preparing to transmit the alert prevents accurate location determination being performed when it is not necessary to determine the pet is safe and therefore decreases the energy requirements to perform the method. Alternate embodiments of the beacon transmit the alert after a predetermined period during which beacon fails to receive responses from the responder in response to polling.

The signals from the beacon in embodiments of the invention include a beacon identifier and a responder identifier and the response from the responder includes the responder identifier, the beacon identifier and a beacon synchronization message. When there are embodiments with multiple responders, such as a beacon with a further responder wherein the beacon transmits the alert after a predetermined period during which beacon fails to receive subsequent response from either the responder or the further responder in response to polling.

The invention comprises entering a low power state on the responder and exiting the low power state on the responder at a time before the beacon is scheduled to next poll. Embodiments of the invention further comprise receiving a message via a communication network that provides an instruction to associate the beacon with the responder. The signal is received using a communication protocol such Wi-Fi, WiMAX, UMTS or LTE.

Embodiments of the invention further comprise receiving a message that provides an instruction to send an alert; and transmitting an alert from the beacon in response to receiving the instruction to send an alert. The instruction to send an alert can be received from the responder. Alternatively, the instruction to send an alert was received via a communication network.

According to the invention the response from the responder includes a beacon synchronization message and the predetermined duration is determined from the synchronization message.

In one embodiment the beacon and the responder move together allowing the protected area that the pet or other object can move within to be mobile. For example, this aspect of the invention allows a pet owner to take the pet for a walk using a portable responder or a tradesman to have a mobile protected area around their work vehicle.

### BRIEF DESCRIPTION OF THE DRAWINGS

FIG. 1 shows a conceptual overview of a pet tracking system.
FIG. 2A shows a conceptual diagram 5 of a stationary responder in the pet tracking system;
FIG. 2B shows a conceptual diagram of a mobile responder in the pet tracking system;
FIG. 3 shows a flow diagram of the steps in the registration and pairing of a beacon and responder in the pet tracking system;
FIG. 4 shows a flow diagram of the steps in protected area monitoring of a beacon and responder in the pet tracking system;
FIG. 5 shows a mode diagram of the pet tracking system in automatic alert mode;
FIG. 6A shows a communication timing diagram of the beacon and responder in pairing mode;
FIG. 6B shows a communication timing diagram of the beacon and responder in protected area mode;
FIG. 7 shows a communication packet structure diagram of the request and response packets between the beacon and the responder;
FIG. 8 shows a block diagram of the beacon device;
FIG. 9 shows a mode diagram of the beacon moving between operation modes in the pet tracking system;
FIG. 10 shows a block diagram of the responder device.

### DETAILED DESCRIPTION

In the embodiments described below, like reference numerals refer to like parts or steps. The embodiments are described for convenience in the context of a dog tracking system, but other pets, e.g., cats, may also be tracked in other embodiments.

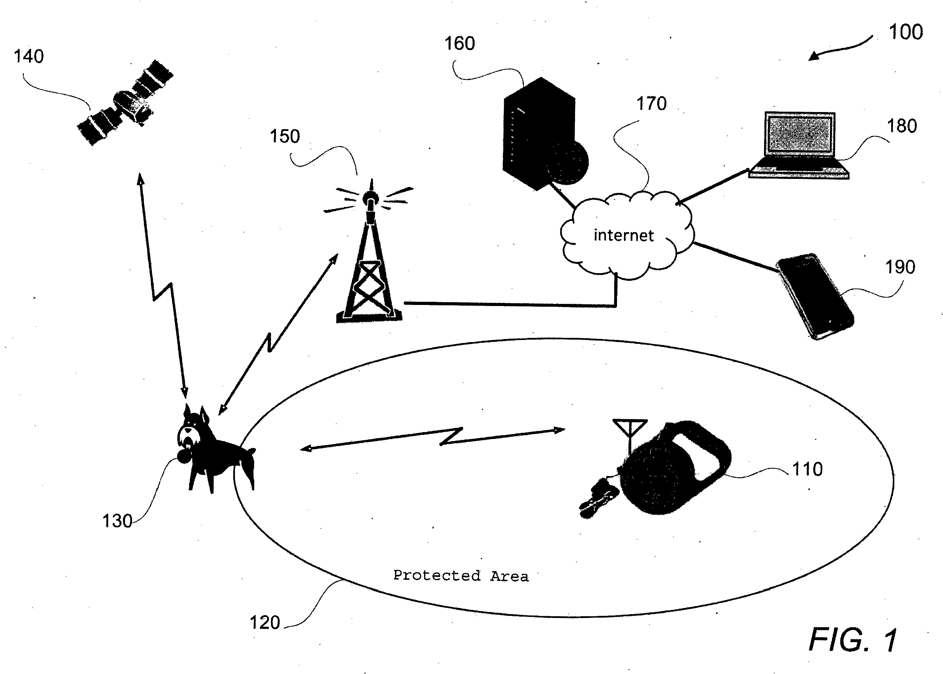

With reference to FIG.1, a pet tracking system 100 has a responder 110 that emits a radio signal at which the margins of reception form a protected area 120. A pet has attached to it a beacon 130 in the form of a dog tag attached to collar that is operable to communicate with the responder 110. In alternative embodiments, the beacon 130 is attached to the pet using other fastening mechanisms. The beacon 130 is operable to calculate its position from a GPS satellite network 140 and communicate with a cellular network 150. To download configuration data and status queries and upload status information, the beacon 130 communicates with a server 160 that is connected to the Internet 170 using the cellular network 150. The beacon utilizes various protocols such as Wi-Fi, WiMAX, UMTS or LTE to connect to the Internet 170. Applications such as web browsers or dedicated applications on a computer 180 or phone 190 can communicate with the server 160 to configure and query the status of the beacon 130 and the responder 110.

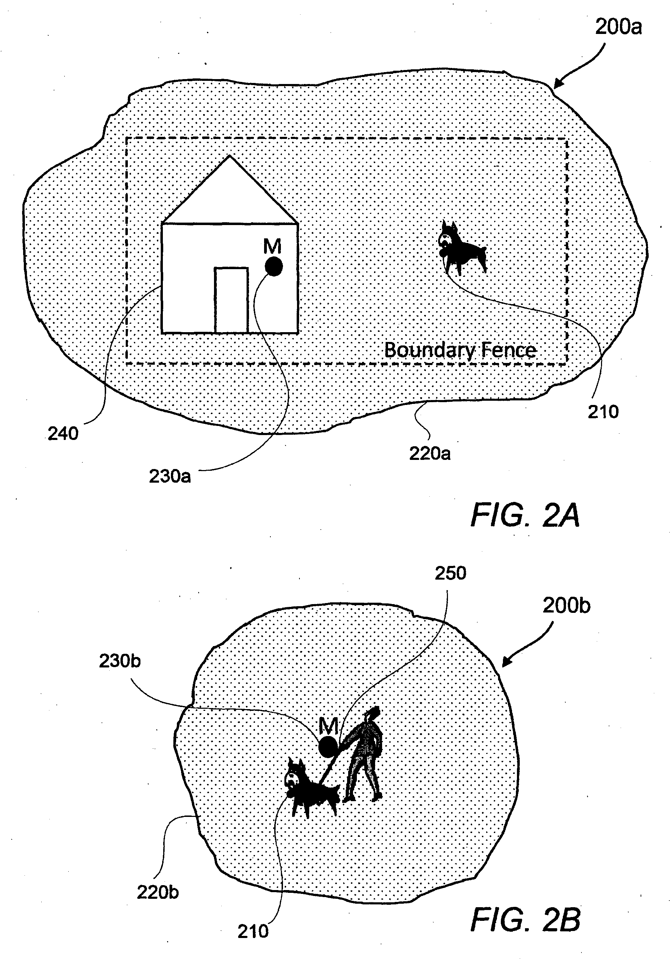

When the beacon 130 moves beyond the protected area 120 and thus can no longer receive responses from the responder 110, the beacon determines its current location using the GPS satellite network and then transmits the current location as a status update to the server 160. The server 160 then notifies the owner of the pet via SMS, e-mail, or some other convenient communication method, that the pet is no longer within a designated protected area 120. The pet owner can then use the web browser or the dedicated application on the computer 180 or the phone 190 to view a map displaying the last transmitted location of the beacon 130, or by some other location identification mechanism. While the beacon 130 is beyond the protected area 120, the beacon 130 determines its position and uploads it to the server 160 at regular intervals until the beacon 130 is back within a protected area 120 or the beacon 130 receives a configuration message from the server 160 to no longer send position updates. The beacon 130 polls the server 160 to receive configuration information or queries. The polling of the server 160 occurs at regular intervals such as 1 hour, 60 seconds, 30 seconds or 15 seconds and can also be triggered manually on the beacon 130. With reference to FIG. 2A and 2B, a pet tracking system 200 can have two or more responders in different forms such as a fixed or mobile responder. A pet has attached to it a beacon 210 and the protected area 220 is defined by the margins of reception with a responder 230. In FIG. 2A the responder 230a is attached to a house 240. In FIG. 2B the responder 230b is integrated into a dog lead 250 held by a pet owner. Each of the house responder 230a and the lead responder 230b is paired with the beacon 210 attached to the dog. The beacon 210 will automatically start determining its position using GPS and transmitting the position to the central server when it cannot receive a response from any of the paired responders 230 after a predetermined number of attempts. One advantage of having a mobile responder is that when a pet is away from home, for example, when a dog is being taken for a walk - the pet remains within a moving protected area around the responder 230b. The extent of the protected area is configurable by adjusting the power of the responder 230.

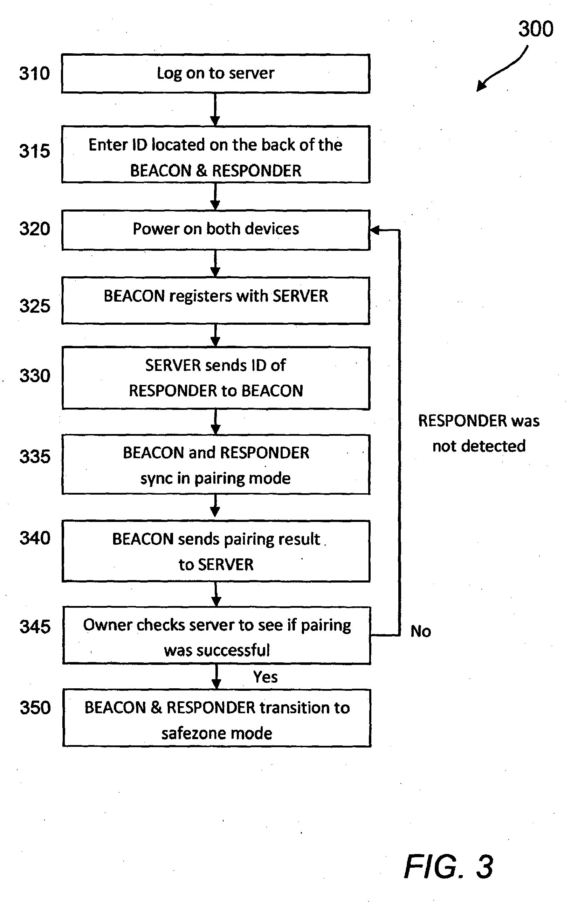

With reference to FIG. 3, in one embodiment a registration and pairing process 300 where a beacon having a beacon identifier and a responder having a responder identifier in a tracking system are paired by:
- logging on to a server (310);
- entering the beacon identifier and the responder identifier (315);
- powering on each of the beacon and the responder (320);
- transmitting a message from the beacon to the server including the beacon identifier (325);
- receiving a message from the server including the responder identifier (330);
- paring and synchronizing the beacon with the responder (335);
   if paring and synchronizing completed, transmitting a message from the beacon to the server including the beacon identifier and the synchronized responder identifier (340);
- determining whether a beacon paired and synchronized with responder and if not then returning to the step of powering on each of the beacon and the responder else proceeding to next step (345); and
- entering protected area monitoring mode and the beacon polling the paired responder (350).

The registration and pairing steps 300 may also include the steps of initially creating an account and associating responder and beacon identifiers with the account so entering the beacon identifier and the responder identifier can be streamlined by selecting identifiers from a drop-down list or a checkbox list. The beacon and responder identifies are unique for each device and they are printed in human and machine readable form on each device.

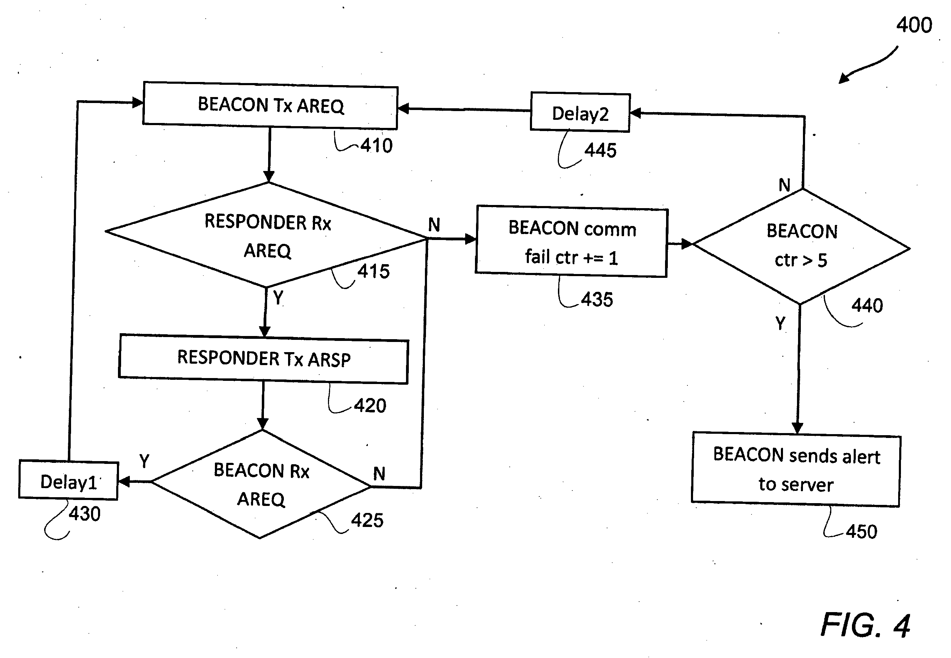

With reference to FIG. 4, in one embodiment steps in protected area monitoring of a paired beacon and responder 400 in a pet tracking system include:
- transmitting an authorization request from the beacon to the responder (410);
- determining if the authorization request from the beacon was received by the responder (415);
- if the responder received the authorization request from the beacon then transmitting an authentication response from the responder including a polling delay (420);
- determining if the authentication response from the responder was received by the beacon (425);
- if the authentication response was received by the beacon then delaying the transmission of the next authentication request from the beacon according to the polling delay(430);
- if the responder did not receive the authorization request from the beacon or if the authentication response was not received by the beacon then incrementing a beacon communication failure count (435);
- determining if the region communication failure count exceeds the threshold of five successive failures (440);
- if the region communication failure count does not exceed the threshold of five then delaying the transmission of the next authentication request from the beacon for a predetermined period (445); and
- if the region communication failure count exceeds the threshold of five successive failures then setting the beacon into automatic alert mode and sending an alert to a central server (450).

In one embodiment, the failure threshold value is nominally five, and is set during system configuration and may be adapted by the system in operation to accommodate the actual radio communications environment.

In alternate embodiments different successive failure thresholds could be configured. For example, in an area with high radio frequency background noise, a threshold number of successive failures may be optimal. The threshold number is selectable in various embodiments by the implementer. Alternatively, the polling frequency could be increased, increasing battery life.

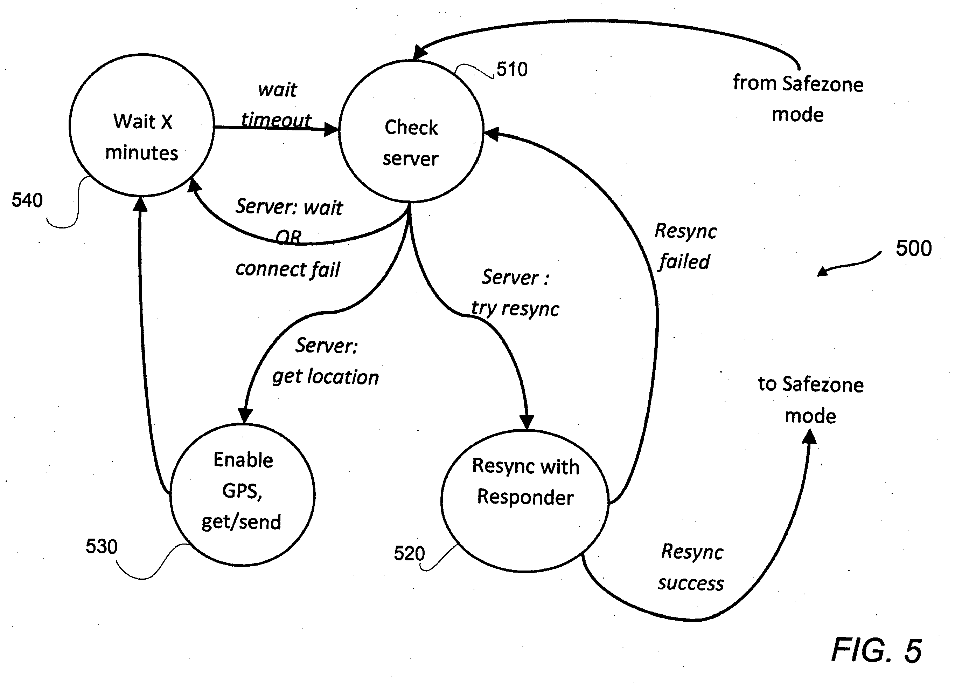

With reference to FIG. 5, a mode diagram of a beacon in a pet tracking system in automatic alert mode 500 can move between the sub modes of:
- check server sub mode (510);
- synchronize with responder sub mode (520);
- GPS location determination and position transmission sub mode (530); and
- wait sub mode (540).

When the beacon can no longer detect a responder after several attempts to communicate with paired responders it exits the protected area mode and enters the automatic alert mode 500. The beacon first enters automatic alert mode 500 in the check server sub mode 510.

In the check server sub mode 510, the beacon powers up the cellular phone module and tries to connect to the central server. If this connection is successful, an alert message is sent to the central server. The server responds with an action to enter one of the sub modes: synchronize with responder sub mode 520; GPS location determination and position transmission sub mode 530; or wait sub mode 540.

In the synchronize with responder sub mode 520, the beacon will transmit its requests to the responder at regular intervals to ensure that the responder is polled with a request during one of its wake cycles. If the synchronization is successful while the beacon is in the synchronize with responder sub mode 520, the beacon will send a status update to the central server and then return back to protected area mode. If the synchronization is unsuccessful after a predetermined number of attempts, the beacon returns to the check server sub mode 510. The purpose of having a predetermined number of attempts, for example, five successive alert failures prevents false alerts being issued due to reasons such as packets being corrupted due to noise interference or while changing a battery on a beacon or a responder.

In the GPS location determination and position transmission sub mode 530, the GPS will power up and determine the location before shutting down the GPS and then use the cellular phone module to transmit the calculated location and the beacon then entering the wait sub mode 540.

In the wait sub mode 540 the beacon is in a low-power battery saving state until a predetermined period has elapsed at which time it wakes up and enters check server sub mode 510.

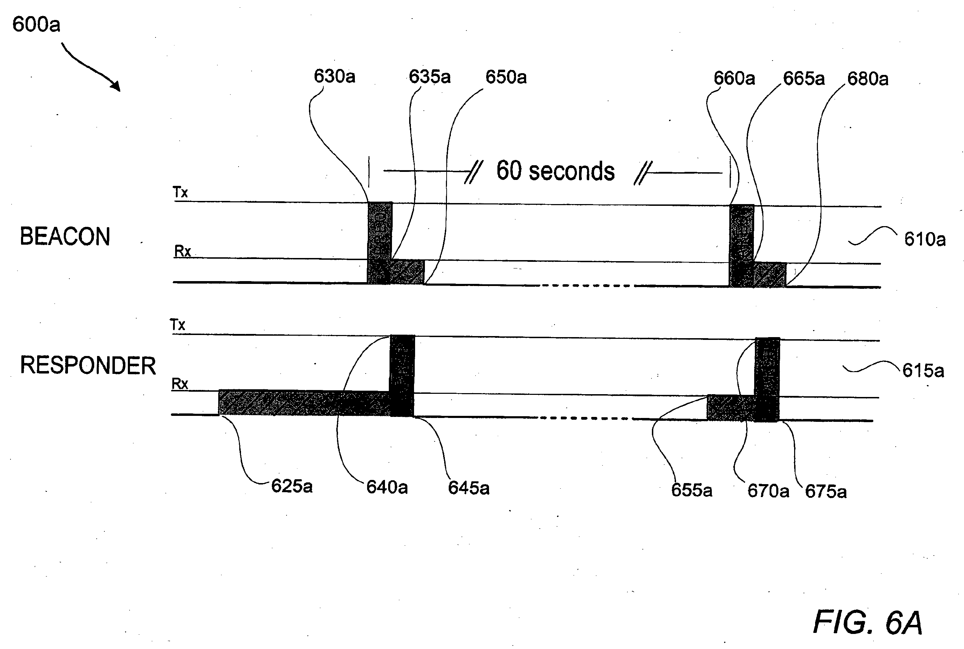

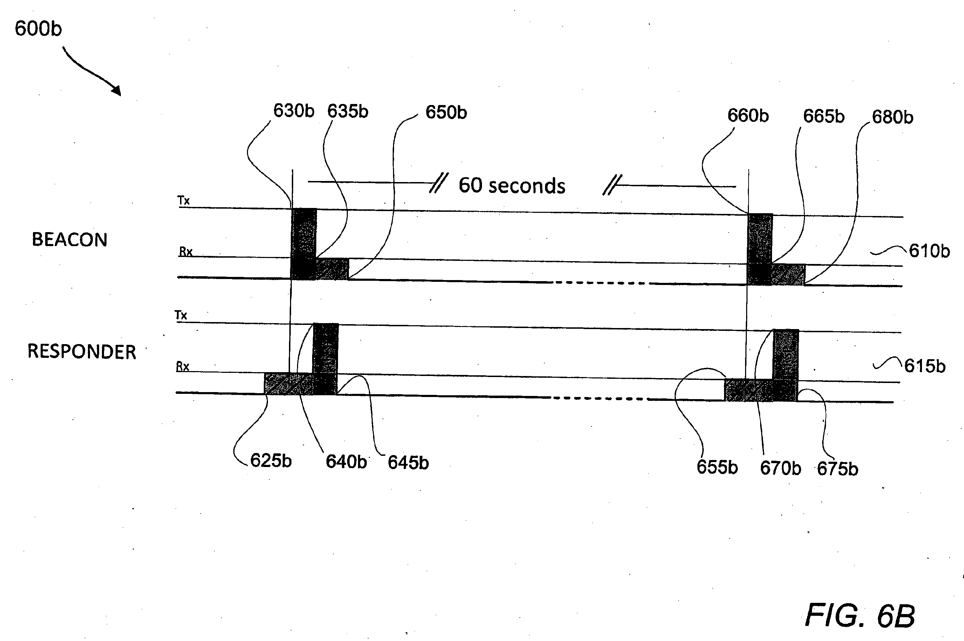

With reference to FIG. 6A and 6B, a communication timing and power diagram of a beacon 610 and a responder 620 in pairing mode and in protected area mode are respectively shown. The power consumption difference between these two modes is indicated by the difference in the area under the power utilization lines.

One difference between the two modes is the extent of the period that the responder remains in a powered up mode waiting for a transmission from the beacon. Another difference is the type of data packet transmitted. In the pairing mode, the beacon is transmitting a pairing request whereas in the protected area mode it is sending an authentication request.

The different transmission and reception states in each mode are described sequentially. In each of the modes the responder initially enters a receive state 625 and waits until it receives a pairing transmission 630a or an authentication transmission 630b. The pairing transmission 630a or the authentication transmission 630b is transmitted by the beacon after which the beacon enters a receive state 635. After the responder receives the pairing transmission 630a or the authentication transmission 630b it transmits a pairing transmission 640a or an authentication transmission 640b respectively and then enters a sleep state 645 for a predetermined responder sleep period. After the beacon receives the pairing transmission 640a or the authentication transmission 640b it then enters a sleep state 650 for a predetermined beacon sleep period such as, for example, 60 seconds.

The responder sleep period ends when the responder enters a receive state 655. The responder sleep period is determined such that it wakes up before the beacon comes out of the beacon sleep period and takes into account the relative time drift that can occur between the beacon and the responder. This drift is dependent on the frequency of the processor on each device and other effects such as temperature.

The beacon sleep period ends when the beacon enters an authentication transmission state 660. Irrespective of whether the previous transmission was the pairing transmission 630a or the authentication transmission 630b, the transmission is an authentication transmission 660 if the pairing response from the responder that was sent in the transmission state 640a was received by the beacon. After transmitting the authentication transmission the beacon enters a receive state 665; the responder receives the beacon authentication request and enters a authentication response state 670 and transmits an authentication response and then enters a further responder sleep state 675; and the beacon receives the authentication response and enters a further beacon sleep state 680 of, for example, 60 seconds. This cycle of responder activation and beacon activation continues while ever the beacon stays in the protected area for the responder.

Other sleep state durations such as 180, 120, 60, 30 or 15 seconds may be suitable for various use scenarios.

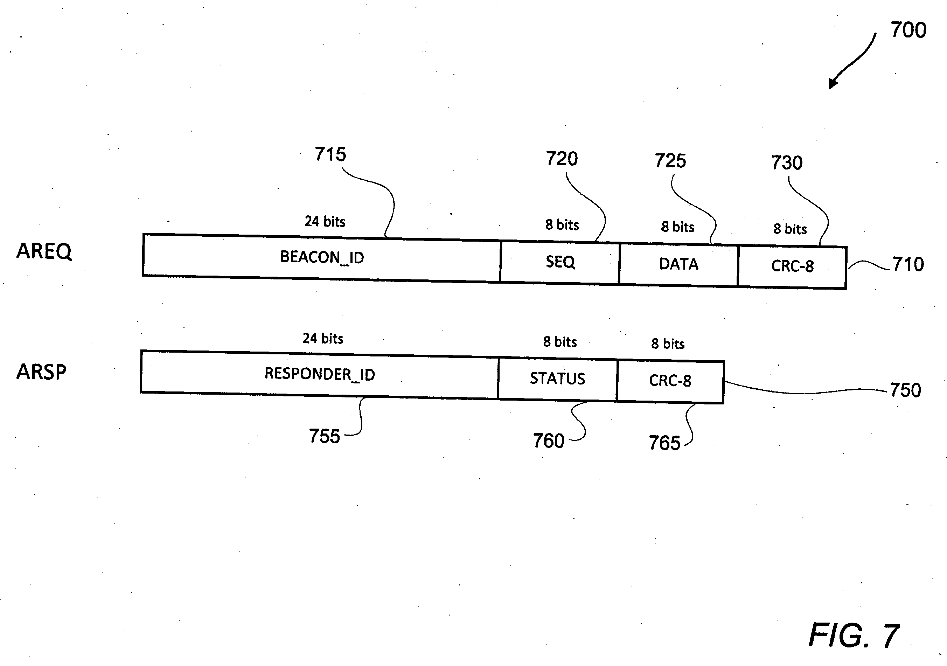

With reference to FIG. 7, an example communication packet structure 700 for an authentication request packet 710 that is sent from a beacon includes a 24 bit beacon identifier 715; an 8 bit sequencer identifier 720, an 8 bit data segment 725 and an 8 bit checksum 730. An example communication packet structure 700 for an authentication response packet includes a 24 bit responder identifier 755; an 8 bit status code 760; and an 8 bit checksum 765. The data segment 725 from the beacon can include a beacon identifier and a responder identifier so that the responder can determine if it is to respond and to which beacon it is responding.

The status code 760 from the responder includes the responder identifier, the beacon identifier. The status code 760 includes also a beacon synchronization message so that the responder can control the timing of the transmissions from the beacon. This controlling of timing enables the responder to prevent signal collisions if there are multiple beacons associated with the responder. The status code 760 can also include any other relevant information such as a manual alert request from the responder or a low battery alert on the responder.

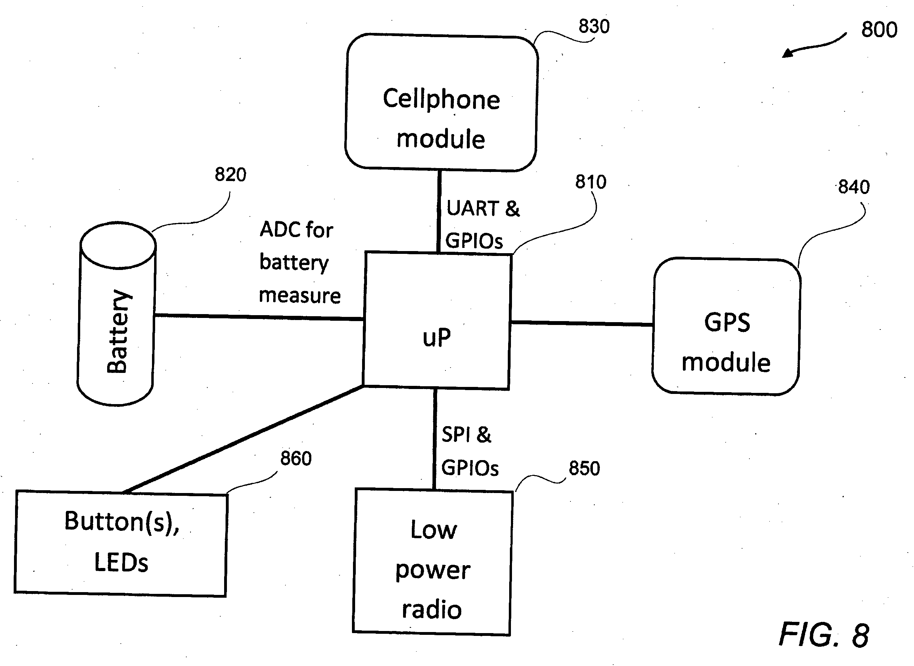

With reference to FIG. 8, a block diagram of a beacon device 800 includes a microprocessor 810 powered by a battery 820. The microprocessor 810 is in communication with a cellular phone module 830, a GPS module 840 and a low-power radio 850. The microprocessor 810 also has a user interface 860 on which it controls indicator LEDs and receive signals from one or more device buttons.

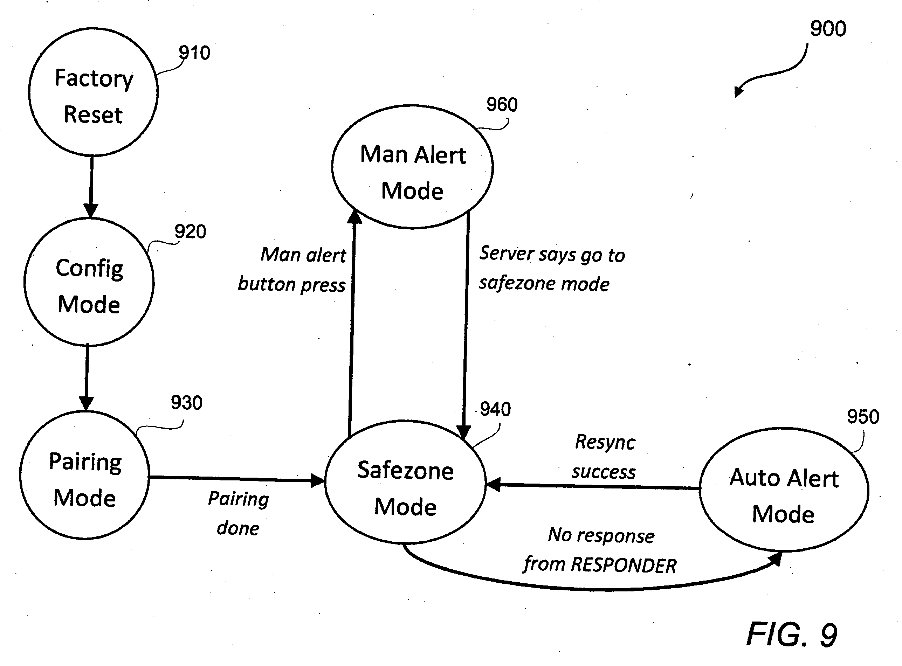

With reference to FIG. 9, a beacon is operable to move between several different modes of operation:
- a factory reset mode (910);
- a configuration mode (920);
- a pairing mode (930);
- a protected area mode (940);
- an auto alert mode (950); and
- a manual alert mode (960).

The beacon is shipped in the factory reset mode 110. The beacon enters the configuration mode 920 after a button on the beacon is held down for a predetermined period such as 10 seconds. While in the configuration mode the beacon communicates with a central server to receive a beacon configuration including one or more responder identifiers that the beacon has been associated with. After receiving the beacon configuration, the beacon enters the pairing mode 930 and attempts to pair with each of the responders provided by the beacon configuration. If the beacon can pair with each of the responders in the beacon configuration that are flagged as new responders for pairing will enter the protected area mode 940.

If at any stage the beacon cannot communicate with at least one responder provided by the beacon configuration and paired with the beacon, then the beacon will enter an auto alert mode 950. While in the auto alert mode 950, if the beacon can re-synchronize with at least one of the responders provided by the beacon configuration then the beacon will return to protected area mode 940. If at any time the button on the beacon is held down for less than the predetermined period then the beacon enters the manual alert mode 960. The beacon switches from manual alert mode 960 back to protected area alert mode 940 if the beacon can communicate with the responder and it has received an instruction from the server to return back to protected area mode 940.

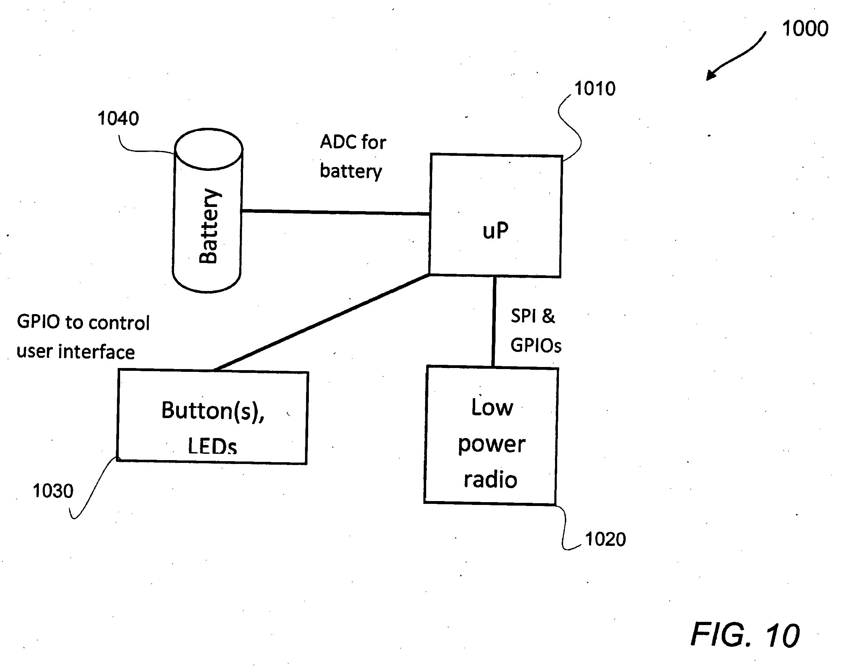

With reference to FIG.10 a block diagram of a responder 1000 includes a microprocessor 1010 in communication with a low power radio 1020; a user interface 1030 on which it controls indicator LEDs and receive signals from one or more device buttons; and the responder 1000 being powered by a battery 1040. Because the responder 1000 is either a fixed device or a portable device, and does not have to be permanently attached to the pet, it is less size constrained and therefore it can incorporate a much higher capacity battery and weight is less of an issue. If the responder 1000 does not receive any signal for an extended duration, it can enter a sleep mode until reactivated using the interface 1030.

In addition to the embodiments specifically described above, those of skill in the art will appreciate that the invention may additionally be practiced in other embodiments. For example, instead of position determination being performed by calculating position using a GPS network, a SIM-based method could be used utilizing cellular network identifier, round trip time and signal strength; or alternatively a hybrid method such as assisted GPS; or a device based method such as network-based techniques they use the cellular network providers infrastructure to identify the location of the cellular device.

Within this written description, the particular naming of the components, capitalization of terms, the attributes, data structures, or any other programming or structural aspect is not mandatory or significant unless otherwise noted, and the mechanisms that implement the described invention or its features may have different names, formats, or protocols. Further, the system may be implemented via a combination of hardware and software, as described, or entirely in hardware elements. Also, the particular division of functionality between the various system components described here is not mandatory; functions performed by a single module or system component may instead be performed by multiple components, and functions performed by multiple components may instead be performed by a single component. Likewise, the order in which method steps are performed is not mandatory unless otherwise noted or logically required. It should be noted that the process steps and instructions of the present invention could be embodied in software, firmware or hardware, and when embodied in software, could be downloaded to reside on and be operated from different platforms used by real time network operating systems.

Algorithmic descriptions and representations included in this description are understood to be implemented by computer programs. Furthermore, it has also proven convenient at times, to refer to these arrangements of operations as modules or code devices, without loss of generality.

Unless otherwise indicated, discussions utilizing terms such as "selecting" or "computing" or "determining" or the like refer to the action and processes of a computer system, or similar electronic computing device, that manipulates and transforms data represented as physical (electronic) quantities within the computer system memories or registers or other such information storage, transmission or display devices.

The present invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, DVDs, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and displays presented are not inherently related to any particular computer or other apparatus. Various general-purpose systems may also be used with programs in accordance with the teachings above, or it may prove convenient to construct more specialized apparatus to perform the required method steps. The required structure for a variety of these systems will appear from the description above. In addition, a variety of programming languages may be used to implement the teachings above.

As used herein, except where the context requires otherwise, the term "comprise" and variations of the term, such as "comprising", "comprises" and "comprised", are not intended to exclude further additives, components, integers or steps.

Finally, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention.

## Claims

1. A method for tracking a pet comprising the steps of:
associating a beacon (130) with a responder (110);
polling the responder by transmitting a signal from the beacon, the beacon in a first power state;
receiving, by the beacon, a response from the responder, wherein the response from the responder includes a beacon synchronization message;
entering a low power state on the beacon for a predetermined duration, the low power state consuming less power than the first power state, wherein the predetermined duration is determined from the synchronization message;
resuming the first power state following the predetermined duration;
polling, by the beacon, the responder following the resumption of the first power state; and
responsive to not receiving a response from the responder within a predetermined time following the polling, transmitting an alert from the beacon.

2. A method for tracking a pet according to claim 1 wherein the alert is transmitted from the beacon by transmitting the alert via a communication network.

3. A method for tracking a pet according to claim 2 wherein the signal is transmitted using a communication protocol selected from a group of communication protocols consisting of: Wi-Fi, WiMAX, UMTS and LTE.

4. A method for tracking a pet according to claim 1 wherein the alert includes a location message indicating a location of the beacon.

5. A method for tracking a pet according to claim 4 further comprising the step of calculating the location for transmission by the beacon using a location determination method including one or more of network-based, SIM-based and device-based methods.

6. A method for tracking a pet according to claim 1 wherein responsive to receiving a response from the responder within the predetermined time following the polling, resuming the low power state on the beacon.

7. A method for tracking a pet according to claim 1 wherein the signal from the beacon includes a beacon identifier and a responder identifier and the response from the responder includes the responder identifier, the beacon identifier and a beacon synchronization message.

8. A method for tracking a pet according to claim 7 further comprising associating the beacon with a further responder wherein the beacon transmits the alert after a predetermined period during which beacon fails to receive subsequent response from either the responder or the further responder in response to polling.

9. A method for tracking a pet according to claim 1 further comprising entering a low power state on the responder and exiting the low power state on the responder at a time before the beacon is scheduled to next poll.

10. A method for tracking a pet according to claim 1 further comprising receiving a message via a communication network that provides an instruction to associate the beacon with the responder.

11. A method for tracking a pet according to claim 10 wherein the signal is received using a communication protocol selected from a group consisting of: Wi-Fi, WiMAX, UMTS and LTE.

12. A method for tracking a pet according to claim 1 further comprising:
receiving a message that provides an instruction to send an alert; and
transmitting an alert from the beacon in response to receiving the instruction to send an alert.

13. A method for tracking a pet according to claim 12 wherein the instruction to send an alert was received from the responder or via a communication network.

14. A method for tracking a pet according to claim 1 wherein the alert is transmitted from the beacon if a predetermined number of subsequent signals fail to result in receiving any subsequent response from the responder.

## Patentansprüche

1. Verfahren zum Nachverfolgen eines Haustiers, das die folgenden Schritte umfasst:
Verknüpfen eines Ortungssender (130) mit einem Responder (110);
Abfragen des Responders durch Senden eines Signals von dem Ortungssender, wobei sich der Ortungssender in einer ersten Leistungsstufe befindet;
Empfangen einer Antwort von dem Responder am Ortungssender, wobei die Antwort von dem Responder eine Ortungssender-synchronisationsnachricht enthält;
Übergehen des Ortungssenders in einen niedrigen Leistungszustand für einen vorgegebenen Zeitraum, wobei der Energieverbrauch im niedrigen Leistungszustand geringer ist als im ersten Leistungszustand und wobei der vorgegebene Zeitraum durch die Synchronisationsnachricht bestimmt ist;
Zurückkehren in den ersten Leistungszustand nach Ablauf des vorgegebenen Zeitraums;
Abfragen des Responders durch den Ortungssender nach dem Zurückkehren in den ersten Leistungszustand; und
Senden eines Alarms durch den Ortungssender, wenn innerhalb eines vorgegebenen, auf die Abfrage folgenden Zeitraums keine Antwort von dem Responder erhalten wurde.

2. Verfahren zum Nachverfolgen eines Haustiers nach Anspruch 1, worin der Alarm von dem Ortungssender durch Übertragen des Alarms über ein Kommunikationsnetzwerk gesendet wird.

3. Verfahren zum Nachverfolgen eines Haustiers nach Anspruch 2, worin das Signal unter Verwendung eines Kommunikationsprotokolls gesendet wird, das unter Wi-Fi, WiMAX, UMTS und LTE ausgewählt ist.

4. Verfahren zum Nachverfolgen eines Haustiers nach Anspruch 1, worin der Alarm eine Positionsnachricht umfasst, die einen Standort des Ortungssenders angibt.

5. Verfahren zum Nachverfolgen eines Haustiers nach Anspruch 4, das ferner einen Schritt zum Berechnen der Sendeposition des Ortungssenders unter Verwendung eines Positionsbestimmungsverfahrens unter Einschluss eines Verfahrens auf Netzwerk-Basis und/oder SIM-Basis und/oder Geräte-Basis umfasst.

6. Verfahren zum Nachverfolgen eines Haustiers nach Anspruch 1, worin der Ortungssender in den niedrigen Leistungszustand zurückkehrt, wenn er nach dem Abfragen innerhalb des vorgegebenen Zeitraums von dem Responder eine Antwort empfängt.

7. Verfahren zum Nachverfolgen eines Haustiers nach Anspruch 1, worin das Signal von dem Ortungssender einen Ortungssenderidentifikator und einen Responderidentifikator umfasst, und die Antwort von dem Responder den Responderidentifikator, den Ortungssenderidentifikator und eine Ortungssendersynchronisationsnachricht umfasst.

8. Verfahren zum Nachverfolgen eines Haustiers nach Anspruch 7, das ferner ein Verknüpfen des Ortungssenders mit einem weiteren Responder umfasst, wobei der Ortungssender den Alarm nach einem vorgegebenen Zeitraum sendet, in dem der Ortungssender keine Folgeantwort von dem Responder oder dem weiteren Responder auf die Anfrage erhält.

9. Verfahren zum Nachverfolgen eines Haustiers nach Anspruch 1, das ferner umfasst, dass der Responder in einen niedrigen Leistungszustand übergeht und der Responder den niedrigen Leistungszustand zu einem Zeitpunkt verlässt, bevor der Ortungssender die nächste planmäßige Abfrage vornehmen soll.

10. Verfahren zum Nachverfolgen eines Haustiers nach Anspruch 1, das ferner ein Empfangen einer Nachricht über ein Kommunikationsnetzwerk umfasst, die mit einer Anweisung zum Verknüpfen des Ortungssenders mit dem Responder versehen ist.

11. Verfahren zum Nachverfolgen eines Haustiers nach Anspruch 10, worin das Signal unter Verwendung eines Kommunikationsprotokolls empfangen wird, das unter Wi-Fi, WiMAX, UMTS und LTE ausgewählt ist.

12. Verfahren zum Nachverfolgen eines Haustiers nach Anspruch 1, das ferner umfasst:
Empfangen einer Nachricht, die mit einer Anweisung zum Senden eines Alarms versehen ist; und
Senden eines Alarms von dem Ortungssender in Reaktion auf den Empfang der Anweisung zum Senden eines Alarms.

13. Verfahren zum Nachverfolgen eines Haustiers nach Anspruch 12, worin die Anweisung zum Senden eines Alarms von dem Responder oder über ein Kommunikationsnetzwerk empfangen wurde.

14. Verfahren zum Nachverfolgen eines Haustiers nach Anspruch 1, worin der Alarm von dem Ortungssender gesendet wird, wenn eine vorgegebene Anzahl von nachfolgenden Signalen nicht zu einem Empfangen einer Folgeantwort von dem Responder führt.

## Revendications

1. Procédé pour suivre un animal de compagnie comprenant les étapes qui consistent :
à associer une balise (130) à un répondeur (110) ;
à interroger le répondeur en transmettant un signal à partir de la balise, la balise étant dans un premier état de puissance ;
à recevoir, par la balise, une réponse à partir du répondeur, où la réponse provenant du répondeur comporte un message de synchronisation de balise ;
à entrer dans un état de faible puissance sur la balise pendant une durée prédéterminée, l'état de faible puissance consommant moins de puissance que le premier état de puissance, où la durée prédéterminée est déterminée à partir du message de synchronisation ;
à reprendre le premier état de puissance après la durée prédéterminée ;
à interroger, par la balise, le répondeur après la reprise du premier état de puissance ; et
à transmettre, en réponse à la non réception d'une réponse à partir du répondeur dans un temps prédéterminé après l'interrogation, une alerte depuis la balise.

2. Procédé pour suivre un animal de compagnie selon la revendication 1, dans lequel l'alerte est transmise depuis la balise en transmettant l'alerte via un réseau de communication.

3. Procédé pour suivre un animal de compagnie selon revendication 2, dans lequel le signal est transmis en utilisant un protocole de communication choisi dans un groupe de protocoles de communication consistant en : Wi-Fi, WiMAX, UMTS et LTE.

4. Procédé pour suivre un animal de compagnie selon la revendication 1, dans lequel l'alerte comporte un message d'emplacement indiquant un emplacement de la balise.

5. Procédé pour suivre un animal de compagnie selon la revendication 4, comprenant en outre l'étape qui consiste à calculer l'emplacement pour la transmission par la balise en utilisant un procédé de détermination d'emplacement comportant un ou plusieurs des procédés basés sur un réseau, basés sur SIM et basés sur un dispositif.

6. Procédé pour suivre un animal de compagnie selon la revendication 1, comprenant le fait de reprendre l'état de faible puissance sur la balise, en réponse à la réception d'une réponse à partir du répondeur dans le temps prédéterminé après l'interrogation.

7. Procédé pour suivre un animal de compagnie selon la revendication 1, dans lequel le signal provenant de la balise comporte un identifiant de balise et un identifiant de répondeur et la réponse provenant du répondeur comporte l'identifiant de répondeur, l'identifiant de balise et un message de synchronisation de balise.

8. Procédé pour suivre un animal de compagnie selon la revendication 7, comprenant en outre le fait d'associer la balise à un autre répondeur où la balise transmet l'alerte après une période prédéterminée pendant laquelle la balise ne parvient pas à recevoir une réponse ultérieure soit à partir du répondeur ou de l'autre répondeur en réponse à l'interrogation.

9. Procédé pour suivre un animal de compagnie selon la revendication 1, comprenant en outre le fait d'entrer dans un état de faible puissance sur le répondeur et de sortir de l'état de faible puissance sur le répondeur à un moment avant que la balise ne soit programmée pour une prochaine interrogation.

10. Procédé pour suivre un animal de compagnie selon la revendication 1, comprenant en outre le fait de recevoir un message via un réseau de communication qui fournit une instruction pour associer la balise au répondeur.

11. Procédé pour suivre un animal de compagnie selon la revendication 10, dans lequel le signal est reçu en utilisant un protocole de communication choisi dans un groupe consistant en : Wi-Fi, WiMAX, UMTS et LTE.

12. Procédé pour suivre un animal de compagnie selon la revendication 1, comprenant en outre le fait :
de recevoir un message qui fournit une instruction pour envoyer une alerte ; et
de transmettre une alerte depuis la balise en réponse à la réception de l'instruction pour envoyer une alerte.

13. Procédé pour suivre un animal de compagnie selon la revendication 12, dans lequel l'instruction pour envoyer une alerte a été reçue à partir du répondeur ou via un réseau de communication.

14. Procédé pour suivre un animal de compagnie selon la revendication 1, dans lequel l'alerte est transmise depuis la balise si un nombre prédéterminé de signaux ultérieurs n'aboutissent pas à la réception d'une réponse ultérieure quelconque à partir du répondeur.
